# FASCICULE DE BREVET EUROPEEN

(11) **EP 2 763 858 B1**
(45) Date de publication et mention de la délivrance du brevet: **18.11.2015**
(21) Numéro de dépôt: 12775767.2
(22) Date de dépôt: 25.09.2012
(51) Int. Cl.: B60B 7/12, B60B 7/06

(54) **ROUE DE VEHICULE COMPORTANT UN ENJOLIVEUR ET ENJOLIVEUR CORRESPONDANT**
FAHRZEUGRAD MIT EINER ABDECKUNG UND ENTSPRECHENDE ABDECKUNG
VEHICLE WHEEL COMPRISING A COVER, AND CORRESPONDING COVER

(30) Priorité: 06.10.2011 FR 1159023
(43) Date de publication de la demande: 13.08.2014
(73) Titulaire: Peugeot Citroën Automobiles SA, 78140 Vélizy Villacoublay (FR); GM Global Technology Operations LLC, Detroit, MI 48265-3000 (US)
(72) Inventeur: LARROQUE, Sebastien, F-27200 Vernon (FR)
(74) Mandataire: Rosenberg, Muriel Sylvie
(86) Numéro de dépôt international: PCT/FR2012/052131
(87) Numéro de publication internationale: WO 2013/050685

(56) Documents cités:
- WO-A1-2008/018101
- WO-A2-2007/140384
- US-A- 4 217 003
- US-A- 4 382 635

## Description

La présente invention concerne une roue pour un véhicule, en particulier pour un véhicule automobile, comportant un enjoliveur.

Elle concerne plus particulièrement une roue pour un véhicule, comportant une jante, des vis de fixation de la jante sur une partie du véhicule et un enjoliveur dont une face dite intérieure est positionnée en regard d'une partie de la jante de manière à masquer les vis de fixation, l'enjoliveur comportant au moins une paroi, faisant saillie de la face intérieure de l'enjoliveur suivant une direction dite longitudinale sensiblement parallèle à l'axe des vis de fixation, de manière à former un obstacle contre lequel vient buter une des vis de fixation lors d'une rotation de l'enjoliveur.

Dans un souci esthétique, de nombreux véhicules sont équipés d'enjoliveurs. Ces éléments viennent cacher les éléments de fixation des jantes sur le véhicule et au moins une partie de ces jantes, la plupart de ces éléments étant inesthétiques pour des raisons de coût.

Tout en restant facilement amovible, les enjoliveurs peuvent aussi assurer une protection contre la corrosion des éléments de fixation des jantes, généralement des vis, contre les intempéries et les projections diverses. Ces vis de fixation sont alors moins attaquées par la corrosion qui risque de les gripper dans leurs logements, rendant difficile leurs démontages le cas échéant.

Comme présenté dans le document FR2595071, un enjoliveur est rapporté contre le voile d'une jante d'une roue et est fixé à celle-ci au moyens de griffes qui, coopérant avec le rebord périphérique du voile de la jante, permettent de maintenir l'enjoliveur sur la jante. Pour assurer à la fois le rôle de protection contre la corrosion et le rôle esthétique, les enjoliveurs ne comportent que peu d'ouvertures, masquant presque totalement les jantes qu'ils recouvrent. Mais, il est aussi important de conserver au moins une ouverture dans chaque enjoliveur, permettant d'accéder aux valves pour contrôler et corriger la pression d'air présente dans les pneumatiques montés sur les jantes. Une telle ouverture dans chaque enjoliveur doit être parfaitement positionnée en regard de chaque valve. Lors du roulage du véhicule, si les griffes glissent le long des rebords périphériques du voile des jantes, les valves ne seront alors plus en regard des ouvertures correspondantes des enjoliveurs, rendant difficile le contrôle et la correction de la pression des pneumatiques.

Pour remédier à ce problème, un type d'enjoliveur connu, présenté notamment par le document FR2498528, comporte des logements réalisés dans la partie centrale de chaque enjoliveur, en regard du voile de la jante, qui viennent s'ajuster sur les vis de fixation de la roue. De cette manière, l'enjoliveur est solidarisé avec la roue dans une position angulaire précise, et ne peut pas tourner par rapport à la jante. Un tel dispositif anti-rotation se montant à l'aveugle, les parties devant coopérer entre elles pour assurer la fonction anti-rotation sont masquées par l'enjoliveur lors du montage de celui-ci sur le voile de la jante. Ainsi, pour faciliter le montage un jeu important est nécessaire au niveau du dispositif anti-rotation, laissant une légère rotation de l'enjoliveur sur le voile de la jante. Cette légère rotation, pour conserver l'accessibilité de la valve, impose que l'ouverture de l'enjoliveur soit surdimensionnée, rendant une telle ouverture peu esthétique.

La présente invention a notamment pour but de résoudre ces problèmes, et de proposer un enjoliveur de roue simple à positionner sur le voile d'une roue tout en comportant un dispositif anti-rotation présentant un très faible jeu de fonctionnement. Un tel dispositif anti-rotation devant par ailleurs, être économique, efficace et sûre.

A cet effet, l'invention concerne une roue pour un véhicule, en particulier pour un véhicule automobile, comportant une jante, des vis de fixation permettant de solidariser la jante sur une partie du véhicule et un enjoliveur dont une face dite intérieure est positionnée en regard d'une partie de la jante de manière à masquer les vis de fixation, l'enjoliveur comportant au moins une paroi, faisant saillie de ladite face intérieure, suivant une direction dite longitudinale alignée sensiblement parallèlement à l'axe des vis de fixation, de manière à former un obstacle contre lequel vient buter une des vis de fixation lors d'une rotation de l'enjoliveur, une telle paroi présentant une forme adaptée pour présenter, suivant la direction longitudinale, un unique point de contact avec la vis de fixation.

Selon une première caractéristique de l'invention, le point de contact est positionné au niveau de la bordure latérale de l'extrémité libre de la tête de la vis de fixation.

Selon un premier mode de réalisation de l'invention, suivant la direction longitudinale, la face latérale de la paroi est orientée de manière oblique par rapport à l'axe de la vis de fixation.

Selon une première variante, la face latérale de la paroi se présente sous la forme d'une portion tronconique, de rayon de courbure au niveau de la zone de contact, au moins égal au rayon de la tête de la vis de fixation.

Selon une seconde variante, la face latérale de la paroi forme une portion sensiblement plane.

Une telle paroi oblique peut présenter, suivant la direction longitudinale, un angle d'inclinaison par rapport à l'axe de la vis de fixation comprise entre 3 et 10 degrés, pouvant aller jusqu'à 30 degrés. Au-delà de 30 degrés, un tel angle d'inclinaison peut permettre à la vis de fixation d'écarté l'enjoliveur du voile de la roue lors de sa rotation. La paroi ne formant plus alors son rôle de butée. En dessous de 3 degrés, les avantages d'une telle inclinaison, permettant un montage facile, à l'aveugle, de l'enjoliveur sur le voile de la roue et permettant de minimiser le jeu fonctionnel une fois l'enjoliveur positionné, ne sont plus présents.

Selon un second mode de réalisation de l'invention et suivant la direction longitudinale, la face latérale de la paroi présente un profil incurvé, avec par exemple un profil en arc de cercle. Dans cet exemple, l'enjoliveur comportant à proximité d'une partie de sa bordure, une ouverture destinée à permettre l'accès d'une valve positionnée sur le voile de la jante, le centre de courbure d'un tel profil en arc de cercle est alors centré au niveau de cette bordure de l'enjoliveur.

Que ce soit pour le premier ou pour le second mode de réalisation, l'enjoliveur comporte toujours une ouverture destinée à permettre l'accès d'une valve positionnée sur le voile de la jante. De même, l'enjoliveur comporte une première parois et une seconde paroi faisant saillies de la face intérieure de l'enjoliveur, chacune des deux parois étant positionnées pour former des butées contre lesquelles viennent respectivement en contact une première vis de fixation lors d'une rotation de l'enjoliveur dans un premier sens de rotation de l'enjoliveur sur la jante et une seconde vis de fixation lors d'une rotation de l'enjoliveur dans le sens opposé de rotation de l'enjoliveur sur la jante. Pour faciliter le montage de l'enjoliveur, les faces latérales des deux parois sont orientées en direction de l'ouverture de l'enjoliveur et donc de la bordure de l'enjoliveur servant de surface d'appui lors du positionnement de l'enjoliveur sur le voile de la jante.

La présente invention concerne aussi un enjoliveur destiné à être solidarisé sur le voile d'une jante formant une roue comportant au moins une des caractéristiques telles que précédemment décrites.

Enfin, la présente invention concerne aussi un véhicule comportant un tel enjoliveur.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1 représente une vue de la face visible du voile d'une jante d'une roue d'un véhicule, comportant un enjoliveur selon l'invention ;
- La figure 2 représente une vue en perspective de la face intérieure de l'enjoliveur ; et
- La figure 3 représente une vue en coupe partielle de la jante avec l'enjoliveur positionné sur le voile de la jante.

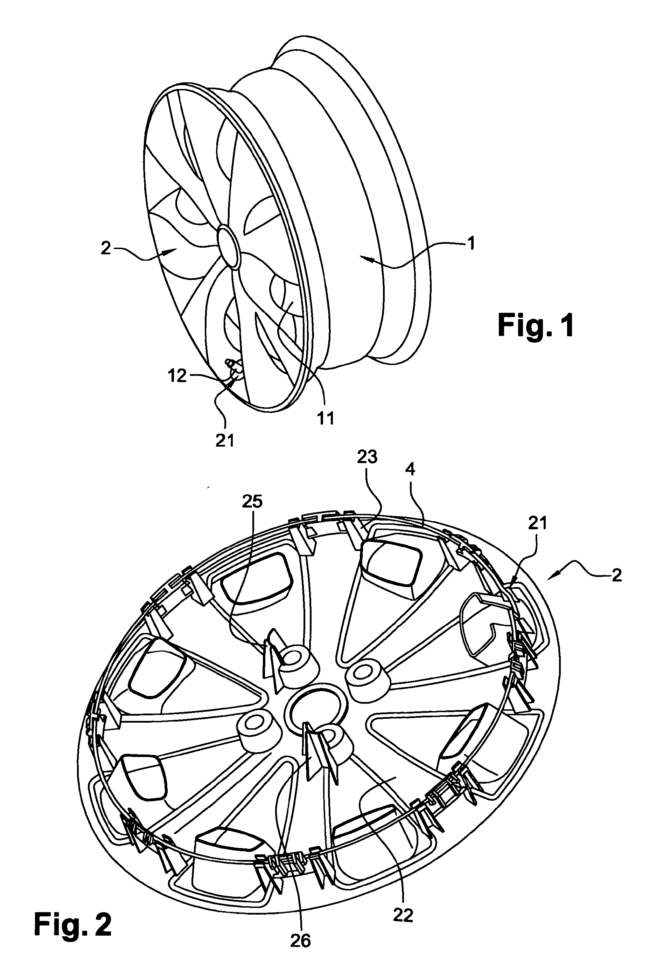

La figure 1 représente une vue en perspective d'une jante 1 d'une roue d'un véhicule, comportant un enjoliveur 2, selon l'invention, solidarisé sur le voile 11 de la jante 1. L'enjoliveur 2 permet de masquer et de protéger les vis de fixation de la roue sur une partie d'un véhicule tel qu'un porte-moyeu, ainsi que l'écrou centrale de fixation d'un roulement de roue (le véhicule, l'écrou de fixation du roulement de roue et les vis de fixation n'étant pas représentés). L'enjoliveur 2 comporte une ouverture 21 permettant d'accéder à une valve 12 permettant de contrôler et de corriger la pression d'air présente dans le pneumatique monté sur la jante 1 (le pneumatique n'étant pas représenté).

La figure 2 représente une vue en perspective de la face intérieure 22 de l'enjoliveur 2. L'enjoliveur 2 comporte des pattes de fixation 23 permettant de solidariser l'enjoliveur 2 au voile de la jante. Les pattes de fixation 23 sont renforcées par un anneau métallique 4 reliant entre elles toutes les pattes de fixation 23. Sur cette figure est aussi visible l'ouverture 21 de l'enjoliveur 2 permettant d'accéder à la valve. Est aussi visible sur cette figure, une première paroi 25 et une seconde paroi 26, selon l'invention, faisant saillie de la face intérieure 22 de l'enjoliveur 2 suivant une direction dite longitudinale, sensiblement parallèle à l'axe des vis de fixation, de manière à former deux obstacles contre lesquels viennent respectivement buter une première et une seconde vis de fixation lors d'une rotation de l'enjoliveur 2. Comme expliqué ultérieurement, les deux parois 25 et 26 sont positionnées symétriquement de part et d'autre d'un plan de symétrie de l'enjoliveur 2, passant par le centre de l'ouverture 21.

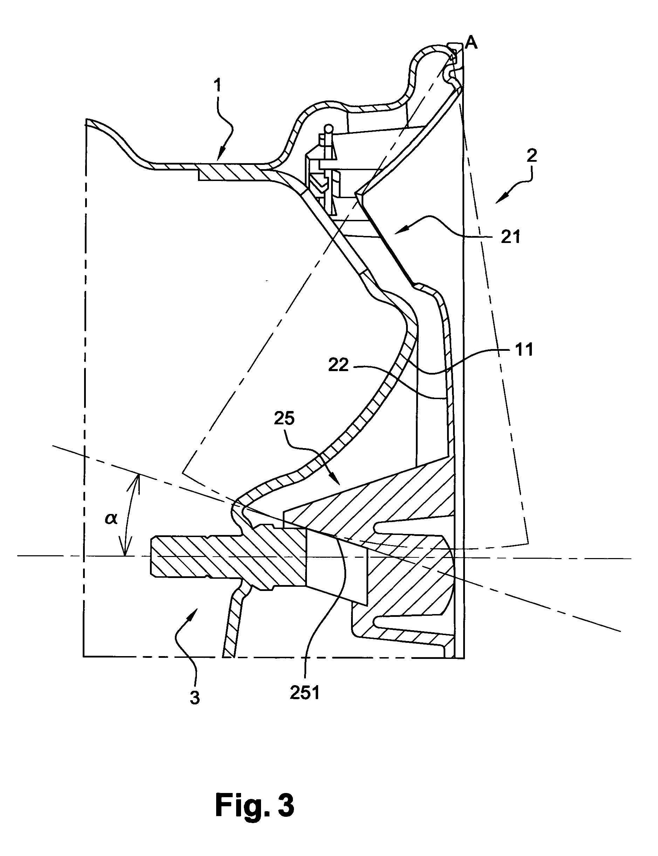

La figure 3 représente une vue en coupe partielle de la jante 1 avec l'enjoliveur 2 positionnée sur le voile 11 de la jante 1. Sur cette figure est plus particulièrement visible la forme de la première paroi 25, selon l'invention. La première paroi 25 présente une face latérale 251 contre laquelle est positionnée en appui la première vis de fixation 3. Lors du montage de l'enjoliveur 2 sur la jante 1, une première opération consiste à positionner la partie de l'enjoliveur 2 comportant l'ouverture 21 au niveau de la valve 12 de la jante 1. Une fois la valve 12 correctement positionnée dans l'ouverture 21 de l'enjoliveur 2, le reste de l'enjoliveur 2 est progressivement positionnée contre le voile 11 de la jante 1, fixant progressivement les pattes de fixation 13 en périphérie du voile 11 de la jante 1. L'enjoliveur 2, lors de son positionnement contre le voile 11 de la jante 1, pivote autour d'un point A positionné au niveau de l'ouverture 21, au point de contact entre le bord de l'enjoliveur 2 et le bord du voile 11 de la jante 1. La face latérale 251 de la paroi 25 est orientée de manière à présenter, suivant au moins un plan longitudinal, un unique point de contact avec la vis de fixation 3. Le point de contact est positionné le long de la bordure latérale de l'extrémité libre de la tête de la vis de fixation 3. Ainsi, dans le plan longitudinal, le profil de la face latérale 251 de la paroi 25 est orienté de manière oblique par rapport à l'axe de la vis de fixation 3, avec un angle d'inclinaison α par rapport à l'axe de la vis de fixation 3 généralement comprise entre 3 et 10 degrés, mais pouvant aller jusqu'à 30 degrés. Une telle inclinaison permet à la surface latérale 251 de la paroi 25 de se rapprocher progressivement de la vis de fixation 3 lors du positionnement de l'enjoliveur 2 sur la jante 1, pour se retrouver au contact de la bordure latérale de l'extrémité libre de la tête de la vis 3, une fois l'enjoliveur 2 positionné. Mais une telle inclinaison doit rester proche de l'axe longitudinal pour ne pas risquer que la tête de la vis 3 ne soulève l'enjoliveur 2 lors d'une rotation de celui-ci, la face latérale 251 de la paroi 25 devant jouer un rôle de butée. Dans l'exemple tel que présenté, la face latérale 251 de la paroi 25 forme une portion tronconique, de rayon de courbure au niveau de la zone de contact avec la vis de fixation 3, proche du rayon de la tête de la vis de fixation 3. Un tel rayon pouvant être plus important, avec la possibilité pour la face latérale de former une surface plane avec toujours une même inclinaison comprise entre 3 et 30°. Enfin une autre variante peut consister pour la face latérale de la paroi à présenter un profil incurvé, formant par exemple un arc de cercle de rayon de courbure centré sur le point A tel que défini précédemment. Lors du positionnement de l'enjoliveur sur le voile de la jante, la face latérale de la paroi glissant contre la tête de la vis avec un jeu constant qui peut être extrêmement faible sans créer une gêne lors du montage de l'enjoliveur sur le voile de la jante.

## Revendications

1. Roue pour véhicule, en particulier pour véhicule automobile, comportant une jante (1), des vis de fixation (3) permettant de solidariser la jante (1) sur une partie du véhicule et un enjoliveur (2) dont une face dite intérieure (22) est positionnée en regard d'une partie de la jante (1) de manière à masquer les vis de fixation (3), l'enjoliveur (2) comportant au moins une paroi (25), faisant saillie de ladite face intérieure (22) suivant une direction dite longitudinale alignée sensiblement parallèlement à l'axe des vis de fixation (3), de manière à former un obstacle contre lequel vient buter une des vis de fixation (3) lors d'une rotation de l'enjoliveur (2), **caractérisée en ce qu'**une face latérale (251) de ladite paroi (25) présente une forme adaptée pour présenter suivant la direction longitudinale une unique ligne de contact avec la vis de fixation (3), ladite ligne de contact étant positionnée au niveau de la bordure latérale de l'extrémité libre de la tête de la vis de fixation (3).

2. Roue selon la revendication 1, **caractérisée en ce que**, suivant ladite direction longitudinale, la face latérale (251) de ladite paroi (25) est orientée de manière oblique par rapport à l'axe de la vis de fixation (3).

3. Roue selon la revendication 2, **caractérisée en ce que** la face latérale de la paroi présente une portion tronconique.

4. Roue selon la revendication 3, **caractérisée en ce que** le rayon de courbure de la portion tronconique de la face latérale de la paroi, au niveau de la zone de contact, est au moins égal au rayon de la tête de la vis de fixation (3).

5. Roue selon la revendication 4, **caractérisée en ce que** la face latérale (251) de la paroi (25) forme une portion sensiblement plane.

6. Roue selon l'une quelconque des revendications 2 à 5, **caractérisée en ce que**, suivant ladite direction longitudinale, la face latérale (251) de la paroi (25) présente un angle d'inclinaison (α) par rapport à l'axe de la vis de fixation (3) comprise entre 3 et 30 degrés.

7. Roue selon la revendication 1, **caractérisée en ce que**, suivant ladite direction longitudinale, la face latérale de ladite paroi présente un profil incurvé.

8. Roue selon la revendication 7, **caractérisée en ce que** ledit profil incurvé forme un arc de cercle.

9. Roue selon la revendication 8, **caractérisée en ce que**, l'enjoliveur comportant à proximité d'une partie de sa bordure, une ouverture destinée à permettre l'accès d'une valve positionnée sur le voile (11) de la jante (1), le centre de courbure dudit arc de cercle est centré au niveau de ladite bordure de l'enjoliveur.

10. Roue selon l'une quelconque des revendications 1 à 8, **caractérisée en ce que** l'enjoliveur (2) comporte une ouverture (21) destinée à permettre l'accès d'une valve positionnée sur le voile (11) de la jante (1).

11. Roue selon la revendication 9 ou 10, **caractérisée en ce que** l'enjoliveur (2) comporte une première parois (25) et une seconde paroi (26) faisant saillies de la face intérieure (22) dudit l'enjoliveur (2), chacune des deux parois (25, 26) étant positionnées pour former des butées contre lesquelles viennent respectivement en contact une première vis de fixation (3) lors d'une rotation de l'enjoliveur (2) dans un premier sens de rotation de l'enjoliveur (2) sur la jante (1) et une seconde vis de fixation lors d'une rotation de l'enjoliveur (2) dans le sens opposé de rotation de l'enjoliveur (2) sur la jante (1).

12. Enjoliveur (2) destiné à être solidarisé sur le voile (11) d'une jante (1) pour former une roue selon l'une quelconque des revendications précédentes.

13. Véhicule comportant un enjoliveur (2) selon la revendication précédente.

## Patentansprüche

1. Fahrzeugrad, insbesondere für ein Kraftfahrzeug, das eine Felge (1), Befestigungsschrauben (3), die erlauben, die Felge (1) mit einem Teil des Fahrzeugs fest zu verbinden, und eine Abdeckung (2) umfasst, von der eine Innenseite (22) derart gegenüber einem Teil der Felge (1) positioniert ist, dass die Befestigungsschrauben (3) verdeckt sind, wobei die Abdeckung (2) mindestens eine Wand (25) aufweist, die aus der Innenseite (22) gemäß einer Längsrichtung hervorsteht, die etwa parallel mit der Achse der Befestigungsschrauben (3) fluchtet, so dass ein Hindernis gebildet wird, gegen welches eine der Befestigungsschrauben (3) bei einer Rotation der Abdeckung (2) anstößt, **dadurch gekennzeichnet, dass** eine Seitenfläche (251) der Wand (25) eine Form aufweist, die geeignet sind, gemäß der Längsrichtung eine einzige Kontaktlinie mit der Befestigungsschraube (3) zu bilden, wobei die Kontaktlinie auf Ebene des Seitenrands des freien Endes des Kopfs der Befestigungsschraube (3) positioniert ist.

2. Rad nach Anspruch 1, **dadurch gekennzeichnet, dass** gemäß der Längsrichtung die Seitenfläche (251) der Wand (25) im Verhältnis zur Achse der Befestigungsschraube (3) schräg ausgerichtet ist.

3. Rad nach Anspruch 2, **dadurch gekennzeichnet, dass** die Seitenfläche der Wand einen kegelstumpfartigen Abschnitt aufweist.

4. Rad nach Anspruch 3, **dadurch gekennzeichnet, dass** der Krümmungsradius des kegelstumpfartigen Abschnitts der Seitenfläche der Wand im Bereich der Kontaktzone mindestens gleich dem Radius des Kopfs der Befestigungsschraube (3) ist.

5. Rad nach Anspruch 4, **dadurch gekennzeichnet, dass** die Seitenfläche (251) der Wand (25) einen etwa ebenen Abschnitt bildet.

6. Rad nach einem der Ansprüche 2 bis 5, **dadurch gekennzeichnet, dass** gemäß der Längsrichtung die Seitenfläche (251) der Wand (25) einen Neigungswinkel (α) im Verhältnis zur Achse der Befestigungsschraube (3) zwischen 3 und 30 Grad inklusive aufweist.

7. Rad nach Anspruch 1, **dadurch gekennzeichnet, dass** gemäß der Längsrichtung die Seitenfläche der Wand ein gekrümmtes Profil aufweist.

8. Rad nach Anspruch 7, **dadurch gekennzeichnet, dass** das gekrümmte Profil einen Kreisbogen bildet.

9. Rad nach Anspruch 8, **dadurch gekennzeichnet, dass**, wobei die Abdeckung in der Nähe eines Teils ihres Rands eine Öffnung aufweist, die dazu bestimmt ist, den Zugriff auf ein Ventil zu erlauben, das auf dem Planseitenanschlag (11) der Felge (1) positioniert ist, das Krümmungszentrum des Kreisbogens im Bereich des Rands der Abdeckung zentriert ist.

10. Rad nach einem der Ansprüche 1 bis 8, **dadurch gekennzeichnet, dass** die Abdeckung (2) eine Öffnung (21) aufweist, die bestimmt ist, den Zugriff auf ein Ventil zu erlauben, das auf dem Planseitenanschlag (11) der Felge (1) positioniert ist.

11. Rad nach Anspruch 9 oder 10, **dadurch gekennzeichnet, dass** die Abdeckung (2) eine erste Wand (25) und eine zweite Wand (26) aufweist, die aus der Innenseite (22) der Abdeckung (2) hervorstehen, wobei jede der zwei Wände (25, 26) positioniert ist, um Anschläge zu bilden, gegen die jeweils eine erste Befestigungsschraube (3) bei einer Rotation der Abdeckung (2) in eine erste Rotationsrichtung der Abdeckung (2) auf der Felge (1) und eine zweite Befestigungsschraube bei einer Rotation der Abdeckung (2) in der entgegengesetzten Rotationsrichtung der Abdeckung (2) auf der Felge (1) in Kontakt kommen.

12. Abdeckung (2), die bestimmt ist, auf dem Planseitenanschlag (11) einer Felge (1) fest verbunden zu sein, um ein Rad nach einem der vorangehenden Ansprüche zu bilden.

13. Fahrzeug, das eine Abdeckung (2) nach vorangehendem Anspruch aufweist.

## Claims

1. Wheel for a vehicle, in particular for a motor car, comprising a rim (1), fixing screws (3) for securing the rim (1) to a part of the vehicle, and a wheel trim (2), a so-called inner face (22) of which is positioned opposite a part of the rim (1) so as to mask the fixing screws (3), the wheel trim (2) comprising at least one wall (25), projecting from said inner face (22) in a so-called longitudinal direction aligned substantially parallel to the axis of the fixing screws (3), so as to form an obstacle against which one of the fixing screws (3) comes to abut when the wheel trim (2) is rotated, **characterised in that** a lateral face (251) of said wall (25) has a form suitable for presenting, in the longitudinal direction, a single line of contact with the fixing screw (3), said contact line being positioned at the lateral edge of the free end of the head of the fixing screw (3).

2. Wheel according to claim 1, **characterised in that**, in said longitudinal direction, the lateral face (251) of said wall (25) is oriented obliquely with respect to the axis of the fixing screw (3).

3. Wheel according to claim 2, **characterised in that** the lateral face of the wall has a frustoconical portion.

4. Wheel according to claim 3, **characterised in that** the radius of curvature of the frustoconical portion of the lateral face of the wall, at the contact region, is at least equal to the radius of the head of the fixing screw (3).

5. Wheel according to claim 4, **characterised in that** the lateral face (251) of the wall (25) forms a substantially flat portion.

6. Wheel according to any one of claims 2 to 5, **characterised in that**, in said longitudinal direction, the lateral face (251) of the wall (25) has an angle of inclination (α) with respect to the axis of the fixing screw (3) lying between 3 and 30 degrees.

7. Wheel according to claim 1, **characterised in that**, in said longitudinal direction, the lateral face of said wall has a curved profile.

8. Wheel according to claim 7, **characterised in that** said curved profile forms an arc of a circle.

9. Wheel according to claim 8, **characterised in that**, the wheel trim comprising, close to a part of its edge, an opening intended to allow access to a valve positioned on the web (11) of the rim (1), the centre of curvature of said arc of a circle is centred at said edge of the wheel trim.

10. Wheel according to any one of claims 1 to 8, **characterised in that** the wheel trim (2) has an opening (21) intended to allow access to a valve positioned on the web (11) of the rim (1).

11. Wheel according to claim 9 or 10, **characterised in that** the wheel trim (2) comprises a first wall (25) and a second wall (26) projecting from the inner face (22) of said wheel trim (2), each of the two walls (25, 26) being positioned so as to form stops against which there respectively come into contact a first fixing screw (3) when the wheel trim (2) is rotated in a first direction of rotation of the wheel trim (2) on the rim (1) and a second fixing screw when the wheel trim (2) is rotated in the opposite direction of rotation of the wheel trim (2) on the rim (1).

12. Wheel trim (2) intended to be secured to the web (11) of a rim (1) in order to form a wheel according to any one of the preceding claims.

13. Vehicle comprising a wheel trim (2) according to the preceding claim.
